# EUROPÄISCHE PATENTSCHRIFT

(11) **EP 4 457 080 B1**
(45) Veröffentlichungstag und Bekanntmachung des Hinweises auf die Patenterteilung: **18.11.2026**
(21) Anmeldenummer: 22844656.3
(22) Anmeldetag: 29.12.2022
(51) Int. Cl.: B29C 63/04

(54) **VERFAHREN ZUM AUFBRINGEN EINER DEKORFOLIE AUF EINE NICHT-EBENE OBERFLÄCHE**
METHOD FOR APPLYING A DECORATIVE FILM ONTO A NON-PLANAR SURFACE
PROCÉDÉ POUR APPLIQUER UN FILM DÉCORATIF SUR UNE SURFACE NON PLANE

(30) Priorität: 01.01.2022 DE 102022000002
(43) Veröffentlichungstag der Anmeldung: 06.11.2024
(73) Patentinhaber: Bayerische Motoren Werke Aktiengesellschaft, 80809 München (DE); E Ink Corporation, Billerica, Massachusetts 01821-4165 (US)
(72) Erfinder: CLARKE, Stella, 85748 Garching (DE); LAMPRON, Jennifer B., Newton, New Hampshire 03858 (US); DUCHAINE, Eric J., East Hampstead, New Hampshire 03826 (US)
(74) Vertreter: Hoffmann Eitle
(86) Internationale Anmeldenummer: PCT/EP2022/088005
(87) Internationale Veröffentlichungsnummer: WO 2023/126476

(56) Entgegenhaltungen:
- DE-A1- 102017 002 701
- DE-A1- 102018 004 880
- US-A- 5 728 246
- US-A1- 2020 269 774

## Beschreibung

### TECHNISCHES GEBIET

Die Erfindung betrifft ein Verfahren zum Aufbringen einer an sich steifen Dekorfolie auf eine nicht-ebene Oberfläche nach dem Oberbegriff des Patentanspruchs 1. Sie betrifft weiterhin eine dafür geeignete Dekorfolie und einen eine solche aufweisenden Folienverbund sowie ein Fahrzeug, insbesondere ein Kraftfahrzeug, mit einer Karosserieaußenhaut, die mittels eines Verfahrens nach einem der vorhergehenden Ansprüche mit einer derartigen Dekorfolie versehen worden ist.

### HINTERGRUND DER ERFINDUNG

Auf Seiten von Automobilkunden besteht vielfach der Wunsch nach einer Individualisierbarkeit und einer Personalisierbarkeit von Fahrzeugen im Außenbereich. Dies ist bislang zwar bereits durch individuelle Fahrzeuglackierungen oder Teillackierungen oder durch Folieren der Karosserieaußenhaut möglich, doch lassen sich derartige individuelle Ausgestaltungen eines Fahrzeugs nur unter erheblichem Aufwand und insbesondere nicht situativ ändern. Im Falle einer Folierung mit einer Dekorfolie muss die Dekorfolie eine große Flexibilität, Dehnbarkeit und Stauchbarkeit aufweisen, was bei dickeren und steiferen Dekorfolien schwierig ist. Zudem kann es darüber hinaus erwünscht sein, das äußere Erscheinungsbild des Fahrzeugs flexibel an einen bestimmten Fahrtzweck anzupassen - seriös und zurückhaltend für eine Nutzung als beruflich genutztes Fahrzeug oder poppig bunt anlässlich eines Surfurlaubs am Strand.

### STAND DER TECHNIK

Es ist bereits bekannt, gekrümmte und gewölbte Oberflächen mit hochflexiblen und dehnbaren sowie stauchbaren Dekorfolien zu kaschieren (s. z.B. DE 10 2018 004 880); mit steiferen Folien, beispielsweise mit Holzfurnier oder mit E-Paper-Folien, ist das bislang nicht möglich. Auch bekannt ist es, an der Fahrzeugkarosserie Anzeigevorrichtungen vorzusehen, die nach der E-Paper-Technologie arbeiten und die zwischen unterschiedlichen optischen Erscheinungsbildern umschaltbar sind, doch ist dies bisher nur auf ebenen Flächen der Fahrzeugkarosserie möglich.

Der nächstliegende Stand der Technik ist die Druckschrift DE 10 2018 004880, die eine Folieranordnung zur Folierung einer Oberfläche eines Fahrzeugteils beschreibt. DE 10 2018 004880 offenbart eine Folieranordnung mit einer Bereitstellungsvorrichtung für Folienmaterial und einer Applikationsvorrichtung, die einen bereitgestellten Bereich des Folienmaterials auf die Oberfläche appliziert. Die Applikationsvorrichtung kann als Kissen oder Walze ausgebildet sein und bewegt sich von einer Ruhestellung in eine Applikationsstellung. Zusätzlich kann die Anordnung eine Haltevorrichtung, eine Schneidvorrichtung und eine Fixierungsvorrichtung umfassen. Im Gegensatz zu DE 10 2018 004880 umfasst die vorliegende Erfindung das Einschneiden eines Musters von Kompressions- und Expansionsschlitzen in die Dekorfolie und das Anpassen der Sandwich-Folie durch Dehnung und Stauchung an konvexe und konkave Bereiche der Oberfläche. Diese Schritte ermöglichen eine präzise Anpassung der Dekorfolie an komplexe Geometrien, was durch die in DE 10 2018 004880 beschriebene Anordnung nicht erreicht wird.

### DARSTELLUNG DER ERFINDUNG

Aufgabe der vorliegenden Erfindung ist es, ein Verfahren zum Aufbringen einer Dekorfolie auf eine nicht-ebene Oberfläche anzugeben, mit dem die Dekorfolie flexibel an beliebige dreidimensional geformte Oberflächen anpassbar ist.

Diese Aufgabe wird alternativ gelöst mit den Merkmalen des Patentanspruchs 1 und des Patentanspruchs 2.

Eine erste Aufgabenlösung bietet ein Verfahren zum Aufbringen einer an sich steifen Dekorfolie mit einer Dekorschicht auf eine nicht-ebene Oberfläche, vorzugsweise eine Karosserieaußenhaut eines Kraftfahrzeugs, welches gekennzeichnet ist durch die Schritte:
a) Bereitstellen der Dekorfolie;
b) Aufbringen einer Adhäsivschicht auf die Dekorfolie;
c) Aufbringen der mit der Adhäsivschicht versehenen Dekorfolie auf eine adhäsive Trägerfolie zur Bildung einer Sandwich-Folie;
d) Einschneiden eines vorgegebenen Musters von sternförmig auseinanderlaufenden oder rautenförmig gestalteten Kompressionsschlitzen und linearen Expansionsschlitzen in die E-Paper-Folie, derart, dass die Kompressionsschlitze und die Expansionsschlitze die Dekorfolie in Dickenrichtung durchdringen, und
e) Aufbringen der Sandwich-Folie auf die nicht-ebene Oberfläche, wobei die Sandwich-Folie durch Dehnung der adhäsiven Trägerfolie und der Dekorfolie an konvexe Bereiche der nicht-ebenen Oberfläche angepasst wird und wobei die Sandwich-Folie durch Stauchung der adhäsiven Trägerfolie und der Dekorfolie an konkave Bereiche der nicht-ebenen Oberfläche angepasst wird.

Eine zweite, alternative Aufgabenlösung bietet ein Verfahren zum Aufbringen einer an sich steifen Dekorfolie mit einer Dekorschicht auf eine nicht-ebene Oberfläche, vorzugsweise eine Karosserieaußenhaut eines Kraftfahrzeugs, welches gekennzeichnet ist durch die Schritte:
a) Bereitstellen der Dekorfolie;
b) Aufbringen einer Adhäsivschicht auf die Dekorfolie;
c') Einschneiden eines vorgegebenen Musters von sternförmig auseinanderlaufenden oder rautenförmig gestalteten Kompressionsschlitzen und linearen Expansionsschlitzen in die Dekorfolie, derart, dass die Kompressionsschlitze und die Expansionsschlitze die Dekorfolie in Dickenrichtung durchdringen;
d') Aufbringen der mit der Adhäsivschicht versehenen Dekorfolie auf eine adhäsive Trägerfolie zur Bildung einer Sandwich-Folie und
e) Aufbringen der Sandwich-Folie auf die nicht-ebene Oberfläche, wobei die Sandwich-Folie durch Dehnung der adhäsiven Trägerfolie und der Dekorfolie an konvexe Bereiche der nicht-ebenen Oberfläche angepasst wird und wobei die Sandwich-Folie durch Stauchung der adhäsiven Trägerfolie und der Dekorfolie an konkave Bereiche der nicht-ebenen Oberfläche angepasst wird.

Unter einer "an sich steifen" Dekorfolie ist hier keine starre, sondern eine im Ausgangszustand in ihrer Flexibilität beschränkte Dekorfolie zu verstehen, die zwar in einer Richtung biegbar sein kann, die aber nicht zugleich in zwei unterschiedlichen Richtungen, also um zwei unterschiedliche Achsen, biegbar ist. Auch die Biegbarkeit der Dekorfolie in ihrem Ausgangszustand kann auf größere Biegeradien beschränkt sein und keine engen Biegeradien zulassen.

Die Anwendung des jeweiligen Verfahrens ist nicht auf die Folierung von nicht-ebenen Oberflächen der Karosserieaußenhaut eines Kraftfahrzeugs beschränkt, sondern es kann auf nahezu alle dreidimensional geformten Oberflächen, insbesondere auch auf solche im Innenraum eines Kraftfahrzeugs vorgesehene Oberflächen angewendet werden.

### VORTEILE

Die erfindungsgemäße Ausgestaltung der Dekorfolie mit einem Muster aus die Dekorfolie in Dickenrichtung durchdringenden individuellen Schlitzen führt dazu, dass die ungeschlitzt an sich nahezu steife Dekorfolie durch das Schlitzmuster der Erfindung dreidimensional flexibel wird. Die Schlitzung erfolgt vorzugsweise mittels Laserstrahlen, mit einem Schneidplotter oder anderen Messern, so dass die einzelnen Schlitze äußerst schmal und damit im ebenen Zustand der Dekorfolie kaum sichtbar sind.

Damit die geschlitzte Dekorfolie beim Aufbringen auf die nicht-ebene Oberfläche handhabbar und verarbeitbar bleibt, wird sie vor dem Schlitzen zunächst auf der Seite ihrer Trägerschicht zumindest mit einer Adhäsivschicht versehen, die beim anschließenden Schlitzen der Dekorfolie nicht mit geschlitzt wird und die der geschlitzten Dekorfolie die erforderliche Stabilität für die darauffolgende Verarbeitung verleiht. Die Adhäsivschicht ist ihrerseits flexibel, dehnbar und stauchbar. Die mit der Adhäsivschicht versehene Dekorfolie kann vor dem Schlitzen oder nach dem Schlitzen auf eine adhäsive Trägerfolie aufgebracht werden. Dabei wird die Adhäsivschicht mit der Trägerfolie verklebt. Auch die Trägerfolie ist flexibel, dehnbar und stauchbar. Erfolgt der Schritt des Schlitzens der Dekorfolie nach dem Verkleben mit der Trägerfolie, so wird auch hier lediglich die Dekorfolie geschlitzt und die Trägerfolie bleibt unversehrt. Auf diese Weise wird eine Sandwich-Folie aus der geschlitzten Dekorfolie, der Adhäsivschicht und der Trägerfolie als flexibler, dehnbarer und stauchbarer Folienverbund gebildet. Eine geeignete Trägerfolie ist beispielsweise eine zur Fahrzeug-Folierung allgemein bekannte Car-Wrapping-Folie.

Die Kompressionsbereiche der geschlitzten Dekorfoliekönnen aufgrund ihrer sternförmigen oder rautenförmigen Struktur gestaucht werden, was beispielsweise dann erforderlich ist, wenn sich die Dekorfolie lokal an eine Vertiefung oder Eindellung der Unterlage, beispielsweise der Karosserieaußenhaut, anpassen muss. Dabei können sich die zwischen den sternförmigen Kompressionsschlitzen verbliebenen spitz zulaufenden Flächenbereiche der Dekorfolie unter Überbrückung des jeweiligen Kompressionsschlitzes einander annähern oder sich gar überlappen, wodurch die Dekorfolie an dieser Stelle zusammengezogen, also in der Fläche komprimiert, wird.

In den Expansionsbereichen kann die Dekorfolie in einer Richtung quer, beispielsweise rechtwinklig, zur Längsrichtung des zumindest einen Expansionsschlitzes gedehnt, also in der Fläche expandiert, werden, wobei sich die Breite eines betreffenden Expansionsschlitzes - zumindest in dessen mittlerem Bereich - vergrößert.

Die Adhäsivschicht und die Trägerfolie machen aufgrund ihrer eigenen Dehnbarkeit und Stauchbarkeit sowohl die Stauchungen der Sandwich-Folie in den Kompressionsbereichen der Dekorfolie als auch die Dehnungen der Sandwich-Folie in den Expansionsbereichen der Dekorfolie mit.

Die nicht-ebene Oberfläche kann gebogen (zweidimensional gekrümmt) oder gewölbt (dreidimensional gekrümmt) sein, wobei die Krümmung konvex oder konkav sein kann; auch können sich konvexe und konkave Bereiche abwechseln und auch deren Krümmungsradien können unterschiedlich sein.

Weitere bevorzugte und vorteilhafte Ausgestaltungsmerkmale des erfindungsgemäßen Verfahrens sind Gegenstand der Unteransprüche 3 bis 9.

Vorzugsweise erfolgt das Einschneiden des vorgegebenen Musters aus den Kompressionsschlitzen und den Expansionsschlitzen in die Dekorfolie mittels eines Laserstrahls.

Von Vorteil ist es auch, wenn nach dem Aufbringen der Sandwich-Folie auf die nicht-ebene Oberfläche in einem weiteren Schritt e) eine Schutzschicht aus einer transparenten Schutzfolie oder eine Klarlackschicht auf die Sandwich-Folie aufgebracht wird.

Eine besonders vorteilhafte Variante des erfindungsgemäßen Verfahrens, die mit anderen Varianten kombinierbar ist, sieht vor, dass zur Bestimmung des vorgegebenen Musters zunächst konvexe Bereiche und konkave Bereiche der nicht-ebenen Oberfläche mittels eines CAD-Programms identifiziert und mit einer Konvexmarkierung beziehungsweise einer Konkavmarkierung markiert werden, dass die so markierte nicht-ebene Oberfläche in eine Ebene abgewickelt wird, dass die Koordinaten der Konvexmarkierungen und der Konkavmarkierungen auf die ebene Dekorfolie übertragen werden und dass die Konvexmarkierungen Expansionsbereiche bestimmen, in die die Expansionsschlitze eingeschnitten werden und dass die Konkavmarkierungen Kompressionsbereiche bestimmen, in die die sternförmig auseinanderlaufenden oder rautenförmig gestalteten Kompressionsschlitze eingeschnitten werden.

Gemäß einer weiteren bevorzugten Variante des erfindungsgemäßen Verfahrens, die mit anderen Varianten kombinierbar ist, werden erste Kompressionsbereiche vorgesehen, bei denen die sternförmig auseinanderlaufenden Kompressionsschlitze ein gemeinsames Zentrum aufweisen, das die Dekorfolie in Dickenrichtung durchdringt.

Zudem werden vorzugsweise zweite Kompressionsbereiche vorgesehen, bei denen die inneren Enden der sternförmig auseinanderlaufenden Kompressionsschlitze im Zentrum des Kompressionselements voneinander beabstandet sind, so dass im Zentrum ein intakter Bereich der Dekorfolie gebildet ist, in dem die Dekorfolie in Dickenrichtung nicht durchschnitten ist. Das intakte Zentrum dieser zweiten Kompressionsbereiche bewirkt, dass beim Vorhandensein von Elektrodenschichten die elektrische Leitung in den Elektrodenschichten der beispielsweise als E-Paper-Folie ausgebildeten Dekorfolie an diesen Orten nicht unterbrochen ist, wodurch der gesamte Leitungswiderstand in der jeweiligen Elektrodenschicht deutlich reduziert ist.

Auch von Vorteil ist es, wenn die im Schritt a) bereitgestellte Dekorfolie im oder vor dem Schritt a) auf eine vorgegebene Außenkontur beschnitten wird und wenn die im Schritt c) beziehungsweise d') gebildete Sandwich-Folie anschließend auf die gleiche Außenkontur beschnitten wird, wobei die dabei ausgeführte und die Trägerfolie durchtrennende Umfangs-Schnittlinie von der Außenkonturlinie der Dekorfolie beabstandet ist. Hierdurch wird vermieden, dass durch dieses Beschneiden der Sandwich-Folie entlang ihres Umfangs der Umfangsrand der Dekorfolie beschädigt wird. Dies ist insbesondere dann von Vorteil, wenn das Beschneiden mittels eines Laserstrahls erfolgt, dessen Intensität aufgrund der größeren Dicke der Trägerfolie zum Schneiden der Trägerfolie größer sein muss als beim Beschneiden der Dekorfolie.

Vorzugsweise weist die Dekorfolie eine erste Elektrodenschicht und eine zweite Elektrodenschicht sowie eine zwischen den beiden Elektrodenschichten angeordnete Dekorschicht auf, deren Lichtreflexionseigenschaften oder Lichttransmissionseigenschaften durch das Anlegen einer elektrischen Spannung veränderbar sind, und die erste Elektrodenschicht und die zweite Elektrodenschicht der im Schritt a) bereitgestellten Dekorfolie werden im oder vor dem Schritt a) mit elektrisch leitenden Kontaktfahnen versehen, die vorzugsweise jeweils um eine in der Ebene der jeweiligen Elektrodenschicht liegende Achse schwenkbar sind.

Durch diese Kontaktfahnen wird elektrischer Strom in die jeweilige Elektrodenschicht eingeleitet, um dadurch eine Zustandsänderung der beispielsweise als E-Paper-Folie ausgebildeten Dekorfolie zu bewirken. Die Schwenkbarkeit der Kontaktfahnen ermöglicht es, die jeweilige Kontaktfahne aus der Ebene der zugeordneten Elektrodenschicht heraus zu schwenken, um sie dann durch eine entsprechend zugeordnete Öffnung in der mit der Sandwich-Folie zu verkleidenden nicht-ebenen Oberfläche hindurchführen zu können. Auf diese Weise sind die Kontaktierungen der Elektrodenschichten nach der Montage der Sandwich-Folie, beispielsweise auf einer Karosserieaußenhaut, unsichtbar. Alternativ können Kontaktfahnen auch mit schwarzer, weißer oder farbiger Folie überklebt oder überlackiert werden.

Die auf die nicht-ebene Oberfläche aufgebrachte Sandwich-Folie kann anschließend bei Bedarf mit einer Farbfolie überzogen werden, um Farbeffekte erzielen zu können. Auch kann die auf die nicht-ebene Oberfläche aufgebrachte Sandwich-Folie zum Schutz mit einer Klarsichtfolie oder einer Klarlackschicht überzogen werden.

Besonders vorteilhaft ist es, wenn die als E-Paper-Folie ausgebildete Dekorfolie nach dem Prinzip der Advanced-Color-e-Paper-Technologie arbeitet, mit der es möglich ist, beliebige Farben darzustellen und zwischen beliebigen Farben umzuschalten. Dadurch ist es beispielsweise möglich, ein Fahrzeug, das beruflich genutzt wird und dafür eine bestimmte Farbe (zum Beispiel Taxi-beige oder Taxi-gelb oder eine CI-Farbe des Unternehmens) trägt, bei einer privaten Nutzung in einer anderen Außenfarbe erscheinen zu lassen.

Selbstverständlich ist es auch möglich und von der Erfindung mit umfasst, nur Bereiche einer Karosserieaußenhaut mit der Dekorfolie zu versehen oder unterschiedliche Bereiche der Karosserieaußenhaut mit unterschiedlichen von E-Paper-Folien gebildeten Dekorfolien zu versehen, um dadurch kleinere Segmente oder Formbereiche der Karosserieaußenhaut farbumschaltbar zu machen. Eine weitere von der Erfindung mit umfasste Idee besteht darin, in die mit einer E-Paper-Folie als Dekorfolie ausgestattete Sandwich-Folie ein flexibles Aktivmatrix-Anzeigeelement als TFT-Schicht zu integrieren, um eine Anzeige von Zeichen und Symbolen zu ermöglichen.

Die Erfindung betrifft auch eine nach dem erfindungsgemäßen Verfahren hergestellte Sandwich-Folie mit einer Dekorfolie, die mittels einer Adhäsivschicht mit einer Trägerfolie verbunden ist. Die Adhäsivschicht und die Trägerfolie sind flexibel, dehnbar und stauchbar. Auch die im Ausgangszustand ziemlich steife Dekorfolie wird durch das erfindungsgemäße Einschneiden eines vorgegebenen Musters von Kompressionsbereichen und Expansionsbereichen zu einer flexiblen, dehnbaren und stauchbaren Dekorfolie. Die so erzeugte Sandwich-Folie übernimmt diese Eigenschaften und lässt sich besonders gut an den Oberflächenverlauf einer nicht-ebenen Oberfläche, beispielsweise einer Karosserieaußenhaut, anpassen.

Die Dekorfolie weist vorteilhaferweise eine Mehrzahl von sternförmigen Kompressionselementen mit unterschiedlichen Anzahlen von sternförmig auseinanderlaufenden Kompressionsschlitzen auf. Eine solche Dekorfolie weist unterschiedlich flexible Bereiche auf und ist daher an Untergründe mit unterschiedlich stark dreidimensional geformten Oberflächen anpassbar.

Dabei ist es besonders von Vorteil, wenn die Anzahl der Expansionselemente pro Flächeneinheit in jenen Bereichen der Dekorfolie, die an einen konvexen Oberflächenbereich anpassbar ist, größer ist je kleiner der Krümmungsradius des konvexen Oberflächenbereichs ist.

Auch von Vorteil ist dabei, wenn die Anzahl der Kompressionselemente pro Flächeneinheit in jenen Bereichen der Dekorfolie, die an einen konkaven Oberflächenbereich anpassbar ist, größer ist je kleiner der Krümmungsradius des konkaven Oberflächenbereichs ist.

Die Dekorschicht der Dekorfolie ist bevorzugt eine Smartglas-LCD-Schicht, die zwischen transparent und opak umschaltbar ist, oder eine E-Paper-Schicht, die zwischen zwei Farben umschaltbar ist. Die Dekorschicht kann aber beispielsweise auch eine Holzfurnierschicht sein.

Schließlich betrifft die Erfindung auch ein Fahrzeug, insbesondere ein Kraftfahrzeug, mit einer Karosserieaußenhaut, die zumindest bereichsweise mittels eines Verfahrens nach einem der vorhergehenden Ansprüche mit einer eine solche Dekorfolie, beispielsweise ausgebildet als E-Paper-Folie, aufweisenden Sandwich-Folie versehen worden ist.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: ein Kraftfahrzeug mit einer eine Karosserieaußenhaut aufweisenden Fahrzeugkarosserie;
- Fig. 2: eine schematische Darstellung des Aufbaus einer E-Paper-Anzeigeeinrichtung in einem vergrößerten Längsschnitt-Ausschnitt;
- Fig. 3: einen Flächenausschnitt einer dreidimensional verformten Dekorfolie nach der Erfindung mit Kompressionsbereichen und Expansionsbereichen gemäß einer ersten Ausführungsform;
- Fig. 4: einen vergrößerten Kompressionsbereich gemäß einer ersten Variante;
- Fig. 5: einen vergrößerten Expansionsbereich;
- Fig. 6: einen Längsschnitt durch eine nach dem erfindungsgemäßen Verfahren hergestellte Sandwich-Folie und
- Fig. 7: einen Flächenausschnitt einer dreidimensional verformten Dekorfolie nach der Erfindung mit Kompressionsbereichen und Expansionsbereichen gemäß einer zweiten Ausführungsform.

### DARSTELLUNG VON BEVORZUGTEN AUSFÜHRUNGSBEISPIELEN

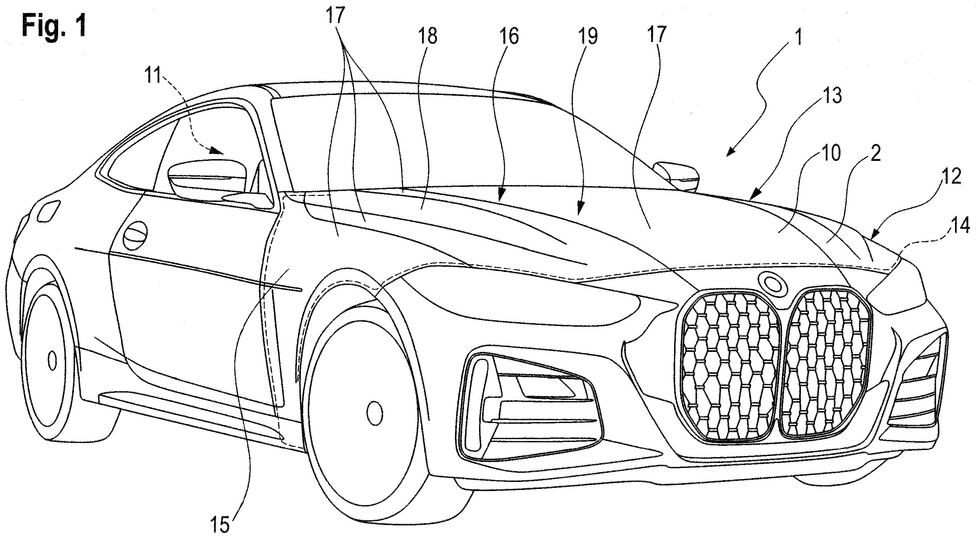

Fig. 1 zeigt ein Kraftfahrzeug 1 mit einer eine Karosserieaußenhaut 10 aufweisenden Fahrzeugkarosserie 12 und einem von dieser zumindest teilweise umgebenen Fahrzeuginnenraum 11. Die Karosserieaußenhaut 10 ist im Bereich der vorderen Haube 13 und der vorderen Kotflügel 14, 15 gemäß dem erfindungsgemäßen Verfahren mit einer nachstehend beschriebenen erfindungsgemäßen Sandwich-Folie 19 foliert, wie es durch die gestrichelten Linien schematisch dargestellt ist. Die Karosserieaußenhaut 10 bildet in diesem Bereich eine nicht-ebene Oberfläche 16 mit konvexen Abschnitten 17 und konkaven Abschnitten 18.

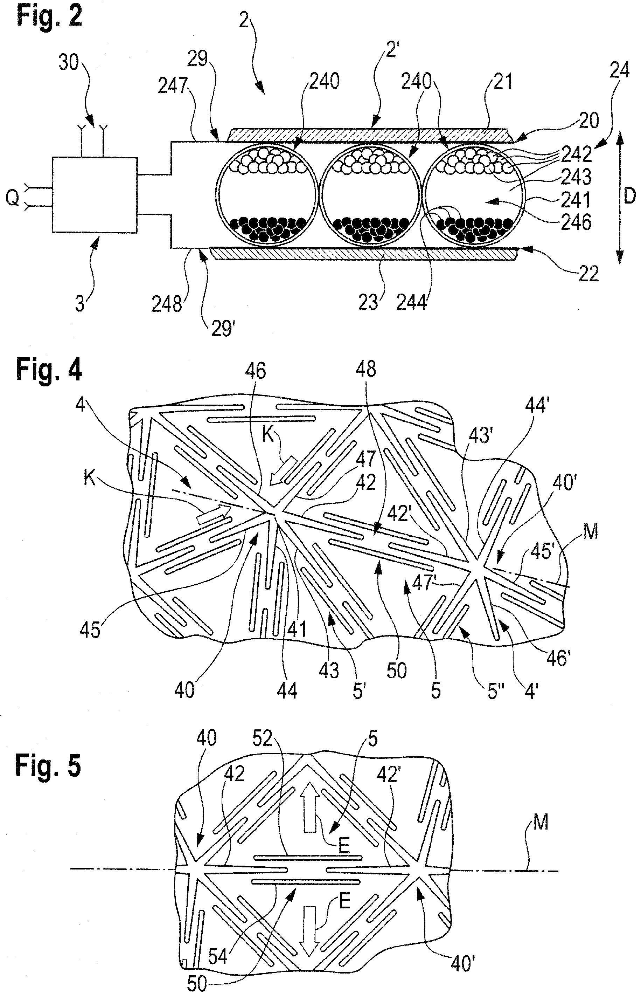

Fig. 2 ist eine Darstellung des Aufbaus einer an sich bekannten E-Paper-Folie 2', die eine erfindungsgemäße Dekorfolie 2 bildet, in einem vergrößerten Längsschnitt-Ausschnitt. Die E-Paper-Folie 2' weist eine erste flächige (obere) transparente Elektrodenschicht 20 mit einer transparenten Deckschicht 21, eine zweite flächige (untere) Elektrodenschicht 22 mit einer Trägerschicht 23 und eine zwischen den beiden Elektrodenschichten 20, 22 angeordnete Anzeigeschicht auf, die die veränderbare Dekorschicht 24 bildet.

Die erste, obere Elektrodenschicht 20 ist mit zumindest einer oberen Anschlussfahne 29 über eine erste elektrisch leitende Verbindung 247 mit einer elektrischen Steuerungseinrichtung 3 verbunden und die zweite, untere Elektrodenschicht 22 ist mit zumindest einer unteren Anschlussfahne 29' über eine zweite elektrisch leitende Verbindung 248 ebenfalls mit der Steuerungseinrichtung 3 verbunden. Die Steuerungseinrichtung 3 wird von einer elektrischen Stromquelle Q mit elektrischer Energie versorgt. Zudem erhält die Steuerungseinrichtung 3 Steuersignale über Steuerleitungen 30.

Die veränderbare Dekorschicht 24 der E-Paper-Folie 2' ist versehen mit einer Vielzahl von als Mikrokapseln ausgestalteten Anzeigekugeln 240. Jede der Anzeigekugeln 240 weist eine transparente Gehäusewandung 241 auf, die einen Innenraum 246 der Anzeigekugel 240 umschließt. Der Innenraum 246 enthält eine Mehrzahl von ersten Pigmenten 242 einer ersten Farbe (hier weiß) und eine Mehrzahl von zweiten Pigmenten 244 einer zweiten Farbe (hier schwarz), die von einem transparenten Fluid 243 umgeben sind, wobei die schwarzen Pigmente 244 üblicherweise positiv und die weißen Pigmente 242 negativ aufgeladen sind.

Bei Aktivierung eines positiven oder negativen elektrischen Feldes durch Anlegen einer Spannung an die Elektroden 20, 22 bewegen sich die schwarzen Pigmente 244 und die weißen Pigmente 242 zu den jeweils entgegengesetzten Elektroden 20, 22. Die Pigmentpartikelmenge, die zur oberen (transparenten) Elektrode 20 wandert, wird für den Betrachter als schwarzer beziehungsweise weißer Punkt sichtbar. Weiterentwicklungen dieser gezeigten E-Paper-Folie 2' mit einer Mehrzahl von unterschiedlichen Anzeigekugeln, die an Stelle der weißen Pigmente 242 farbige Pigmente enthalten, besitzen die Fähigkeit, Farben anzuzeigen.

Die Steuerungseinrichtung 3 versorgt die Elektroden 20, 22 mit einem elektrischen Schaltsignal mit entsprechender Polarität, um die Anzeigekugeln 240 zum Beispiel von schwarz auf weiß oder umgekehrt umzuschalten. Ist die Anzeigeschicht 24 der E-Paper-Folie 2' in der Lage, unterschiedliche Farben anzuzeigen, so ist die Steuerungseinrichtung 3 in der Lage die Anzeigekugeln 240 so zu steuern, dass die E-Paper-Folie 2' eine vom Nutzer gewünschte Farbe anzeigt.

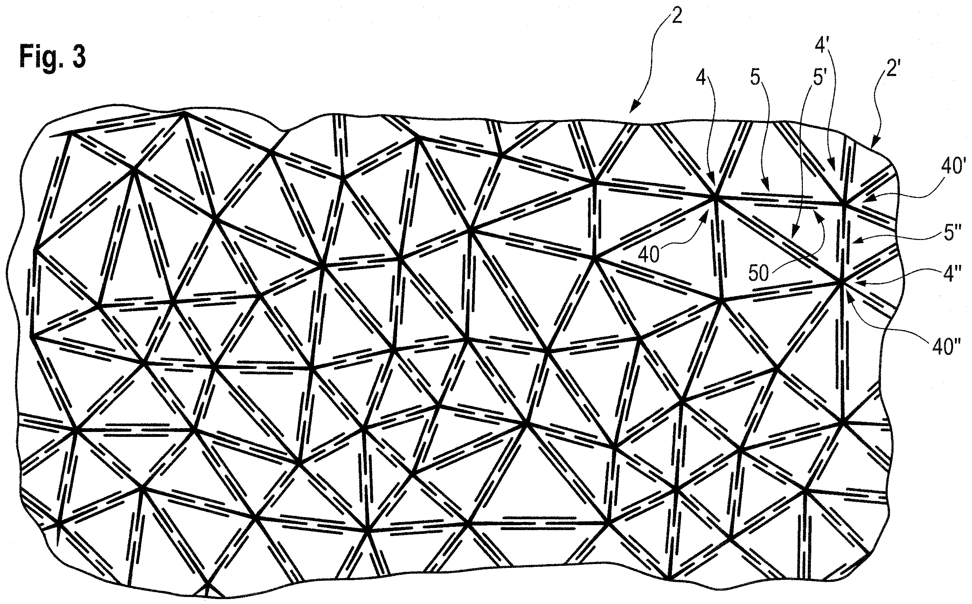

Fig. 3 zeigt einen Flächenausschnitt der Dekorfolie 2 gemäß der Erfindung. Diese Dekorfolie 2 ist mit einer Vielzahl von Kompressionsbereichen 4, 4', 4" und Expansionsbereichen 5, 5', 5" versehen. Jeder Kompressionsbereich 4, 4', 4" weist ein in Fig. 4 im Detail gezeigtes sternförmiges Kompressionselement 40, 40', 40" auf, das durch eine Mehrzahl von aus einem gemeinsamen Zentrum 41 sternförmig auseinanderlaufenden Kompressionsschlitzen 42, 43, 44, 45, 46, 47; 42', 43', 44', 45', 46', 47' gebildet ist, die die Dekorfolie 2 in Dickenrichtung D durchdringen. Die Kompressionsschlitze 42, 43, 44, 45, 46, 47; 42', 43', 44', 45', 46', 47' weisen bei einer ebenen Erstreckung der Dekorfolie 2, wie sie in Fig. 4 dargestellt ist, jeweils eine Schlitzbreite auf, die vom Zentrum 41 des Kompressionselements 40 zu dem jeweiligen freien Ende des betreffenden Kompressionsschlitzes 42, 43, 44, 45, 46, 47; 42', 43', 44', 45', 46', 47' abnimmt, so dass sich der jeweilige Kompressionsschlitz 42, 43, 44, 45, 46, 47; 42', 43', 44', 45', 46', 47' zu seinem freien Ende hin verjüngt.

Einander benachbarte Kompressionselemente 40, 40' bilden jeweils ein Paar aufeinander zulaufender Kompressionsschlitze 42, 42' aus. Die freien Enden dieser aufeinander zulaufenden Kompressionsschlitze 42, 42' berühren einander nicht, sondern sind voneinander beabstandet und belassen zwischen ihren freien Enden einen ungeschlitzten Brückenbereich 48, in dem die Dekorfolie 2 intakt und im Fall der E-Paper-Folie 2' somit elektrisch funktionsfähig ist. Diese aufeinander zulaufenden Kompressionsschlitze 42, 42' weisen in ihrer Längserstreckung eine gemeinsame Mittelachse M auf.

Zwischen zwei benachbarten Kompressionselementen 40, 40' ist stets ein den Expansionsbereich 5 bildendes Expansionselement 50 vorgesehen. Dazu verlaufen, wie es in Fig. 5 zu sehen ist, parallel zu jedem Paar von aufeinander zulaufenden Kompressionsschlitzen 42, 42' und seitlich davon beabstandet auf zwei voneinander abgewandten Seiten des Paars aufeinander zulaufender Kompressionsschlitze 42, 42' ein erster Expansionsschlitz 52 und ein zweiter Expansionsschlitz 54, die parallel zueinander ausgerichtet sind. Der jeweilige Expansionsschlitz 52, 54 weist bei ebener Erstreckung der Dekorfolie 2, wie sie in Fig. 5 dargestellt ist, zueinander parallele Längskanten auf und ist so von gleichbleibender Schlitzbreite.

Auch die Expansionsschlitze 52, 54 durchdringen die Dekorfolie 2 in Dickenrichtung D. Somit durchtrennen im Fall der E-Paper-Folie 2' sowohl die Kompressionsschlitze 42, 43, 44, 45, 46, 47; 42', 43', 44', 45', 46', 47' als auch die Expansionsschlitze 52, 54 lokal die Deckschicht 21, die erste Elektrodenschicht 20, die Anzeigeschicht 24, die zweite Elektrodenschicht 22 und die Trägerschicht 23.

Die parallel zur gemeinsamen Mittelachse M der Kompressionsschlitze 42, 42' verlaufenden Expansionsschlitze 52, 54 erstecken sich entlang des zum freien Ende weisenden vorderen Drittels der Längserstreckung des jeweiligen zugeordneten Kompressionsschlitzes 42, 42' oder bis zu dessen Hälfte.

Wird auf die Dekorfolie 2 in der Folienfläche eine Zugkraft aufgebracht, die quer, beispielsweise rechtwinklig, zur Längserstreckung eines Expansionsschlitzes 52, 54 wirkt (wie es durch die Pfeile E in Fig. 5 symbolisch dargestellt ist), so vergrößert sich die Öffnungsweite des Expansionsschlitzes 52, 54, also dessen Breite, wodurch sich die Dekorfolie 2 in diesem Bereich lokal quer zur Längserstreckung entlang der gemeinsamen Mittelachse M dehnt.

Wird auf die Dekorfolie 2 in der Folienfläche eine Druckkraft oder Schubkraft aufgebracht, die in Richtung auf das Zentrum 41 des Kompressionselements 40 wirkt wie es durch die Pfeile K in Fig. 4 symbolisch dargestellt ist), so verringert sich die Öffnungsweite von zumindest einem Kompressionsschlitz 42, 42', wodurch die Dekorfolie 2 in diesem Bereich lokal gestaucht wird.

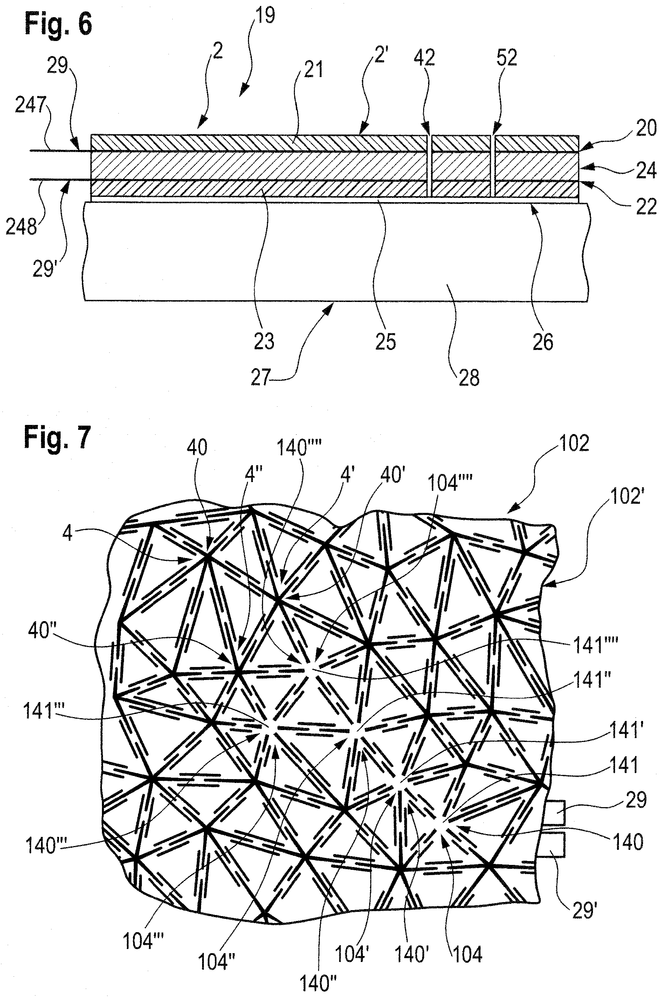

Fig. 6 zeigt einen Längsschnitt durch eine nach dem erfindungsgemäßen Verfahren hergestellte Sandwich-Folie 19. Die als E-Paper-Folie 2' ausgebildete Dekorfolie weist die mit der elektrischen Steuerungseinrichtung 3 elektrisch leitend verbundene transparente obere Elektrodenschicht 20, die mit der transparenten Deckschicht 21 versehen ist, sowie die ebenfalls mit der elektrischen Steuerungseinrichtung 3 elektrisch leitend verbundene untere Elektrodenschicht 22, die auf der Trägerschicht 23 vorgesehen ist, und die dazwischen gelegene Anzeigeschicht 24 auf.

Die Trägerschicht 23 wird auf ihrer von der unteren Elektrodenschicht 22 abgewandten Unterseite mit einer Adhäsivschicht 26 versehen. Die Adhäsivschicht 26 wird beispielsweise von einer doppelseitig klebenden dünnen Klebefolie 25 gebildet; sie kann aber auch durch einen im Sprühverfahren auf die Trägerschicht 23 aufgetragenen Klebstofffilm gebildet sein. Die so mit der Adhäsivschicht 26 versehene E-Paper-Folie 2' wird anschließend auf eine adhäsive Trägerfolie 27 kaschiert, die beispielsweise von einer flexiblen, dehnbaren und stauchbaren Car-Wrapping-Folie 28 gebildet ist, wodurch ein zunächst noch wenig flexibler und noch ziemlich steifer Folienverbund als Sandwich-Folie geschaffen wird. Dieser Folienverbund wird anschließend einem Laser-Schneidprozess unterzogen, bei dem die E-Paper-Folie 2' von ihrer Oberseite, also von der Seite mit der Deckschicht 21, aus mit einem Laserstrahl zur Ausbildung des vorgegebenen Musters von Schlitzen durchtrennt wird, wobei in Fig.6 beispielhaft der Kompressionsschlitz 42 und der Expansionsschlitz 52 dargestellt sind. Dabei bleiben die Adhäsivschicht 26 und die Trägerfolie 27 unversehrt und die von der E-Paper-Folie 2' gebildete Dekorfolie 2 erhält durch die Schnitte ihre Flexibilität, ihre lokale Dehnbarkeit und ihre lokale Stauchbarkeit.

In Fig. 7 ist eine abgewandelte Ausführungsform einer erfindungsgemäß ausgestalteten und als E-Paper-Folie 102' ausgebildete Dekorfolie 102 gezeigt, die im Prinzip der Dekorfolie 2 aus Fig. 3 entspricht. Wie auch bei der als E-Paper-Folie 2' ausgebildeten Dekorfolie 2 ist an der oberen Elektrodenschicht 20 und an der unteren Elektrodenschicht 22 jeweils eine elektrische Anschlussfahne 29, 29' vorgesehen, durch die elektrische Energie in die Elektrodenschichten 20, 22 der E-Paper-Folie 102' eingeleitet wird. Die in Fig. 7 dargestellte E-Paper-Folie 102' weist in Abwandlung zu der Ausführungsform aus Fig. 3 nicht nur die Kompressionsbereiche 4, 4', 4" mit den sternförmigen Kompressionselementen 40, 40', 40" auf, deren Kompressionsschlitze in einem gemeinsamen Zentrum 41 ineinander über gehen, sondern insbesondere in der Nähe der Anschlussfahnen 29, 29' auch Kompressionsbreiche 104, 104', 104", 104"', 104ʺʺ mit sternförmigen Kompressionselementen 140, 140', 140", 140‴, 140ʺʺ deren sternförmig angeordnete Kompressionsschlitze im Zentrum 141, 141', 141", 141‴, 141ʺʺ des jeweiligen Kompressionselements 140, 140', 140", 140‴, 140"" nicht miteinander verbunden sind. Dadurch ist die E-Paper-Folie 102' im jeweiligen Zentrum 141, 141', 141" intakt und unversehrt und der elektrische Strom kann in diesen Zentrumsbereichen durch das jeweilige Kompressionselement 140, 140', 140", 140"', 140ʺʺ ungehindert und widerstandsarm hindurchfließen. Dadurch wird die Stromversorgung der von den Anschlussfahnen 29, 29' weiter entfernt gelegenen Kompressionselemente 40, 40', 40" verbessert.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Kraftfahrzeug
- 2: Dekorfolie
- 2': E-Paper-Folie
- 3: Steuerungseinrichtung
- 4: Kompressionsbereich
- 4': Kompressionsbereich
- 4": Kompressionsbereich
- 5: Expansionsbereich
- 5': Expansionsbereich
- 5": Expansionsbereich
- 10: Karosseriehaut
- 11: Fahrzeuginnenraum
- 12: Fahrzeugkarosserie
- 13: Haube
- 14: Kotflügel
- 15: Kotflügel
- 16: nicht-ebene Oberfläche
- 17: konvexer Abschnitt von 10
- 18: konkaver Abschnitt von 10
- 19: Sandwich-Folie
- 20: erste flächige (obere) transparente Elektrodenschicht
- 21: Deckschicht
- 22: zweite flächige (untere) transparente Elektrodenschicht
- 23: Trägerschicht
- 24: Dekorschicht
- 25: Klebefolie
- 26: Adhäsivschicht
- 27: Trägerfolie
- 28: Car-Wrapping-Folie
- 29: Anschlussfahne
- 29': Anschlussfahne
- 30: Steuerleitungen
- 40: Kompressionselement
- 40': Kompressionselement
- 40": Kompressionselement
- 41: Zentrum
- 42: Kompressionsschlitz
- 42': Kompressionsschlitz
- 43: Kompressionsschlitz
- 43': Kompressionsschlitz
- 44: Kompressionsschlitz
- 44': Kompressionsschlitz
- 45: Kompressionsschlitz
- 45': Kompressionsschlitz
- 46: Kompressionsschlitz
- 46': Kompressionsschlitz
- 47: Kompressionsschlitz
- 47': Kompressionsschlitz
- 48: ungeschlitzter Brückenbereich
- 50: Expansionselement
- 52: Expansionsschlitz
- 54: Expansionsschlitz
- 102: Dekorfolie
- 102': E-Paper-Folie
- 104: Kompressionsbereich
- 104': Kompressionsbereich
- 104": Kompressionsbereich
- 104‴: Kompressionsbereich
- 104ʺʺ: Kompressionsbereich
- 140: Kompressionselement
- 140': Kompressionselement
- 140": Kompressionselement
- 140‴: Kompressionselement
- 140ʺʺ: Kompressionselement
- 141: Zentrum
- 141': Zentrum
- 141": Zentrum
- 141‴: Zentrum
- 141ʺʺ: Zentrum
- 240: Anzeigekugel
- 241: transparente Gehäusewandung
- 242: erste Pigmente
- 243: transparentes Fluid
- 244: zweite Pigmente
- 246: Innenraum
- 247: erste elektrisch leitende Verbindung
- 248: zweite elektrisch leitende Verbindung

- D: Dickenrichtung
- E: Pfeil (Dehnung)
- K: Pfeil (Stauchung)
- M: Mittelachse
- Q: elektrische Stromquelle

## Patentansprüche

1. Verfahren zum Aufbringen einer an sich steifen Dekorfolie (2) mit einer Dekorschicht (24) auf eine nicht-ebene Oberfläche (16), vorzugsweise eine Karosserieaußenhaut (10) eines Kraftfahrzeugs (1), mit den Schritten
a) Bereitstellen der Dekorfolie (2);
b) Aufbringen einer Adhäsivschicht (26) auf die Dekorfolie (2);
c) Aufbringen der mit der Adhäsivschicht (26) versehenen Dekorfolie (2) auf eine adhäsive Trägerfolie (27) zur Bildung einer Sandwich-Folie (19);
d) Einschneiden eines vorgegebenen Musters von sternförmig auseinanderlaufenden oder rautenförmig gestalteten Kompressionsschlitzen (42, 43, 44, 45, 46, 47; 42', 43', 44', 45', 46', 47') und linearen Expansionsschlitzen (52, 54) in die Dekorfolie (2), derart, dass die Kompressionsschlitze (42, 43, 44, 45, 46, 47; 42', 43', 44', 45', 46', 47') und die Expansionsschlitze (52, 54) die Dekorfolie (2) in Dickenrichtung (D) durchdringen;
e) Aufbringen der Sandwich-Folie (19) auf die nicht-ebene Oberfläche (16), wobei die Sandwich-Folie (19) durch Dehnung der adhäsiven Trägerfolie (27) und der Dekorfolie (2) an konvexe Bereiche (17) der nicht-ebenen Oberfläche (16) angepasst wird und wobei die Sandwich-Folie (19) durch Stauchung der adhäsiven Trägerfolie (27) und der Dekorfolie (2) an konkave Bereiche (18) der nicht-ebenen Oberfläche (16) angepasst wird.

2. Verfahren zum Aufbringen einer an sich steifen Dekorfolie (2) mit einer Dekorschicht (24) auf eine nicht-ebene Oberfläche (16), vorzugsweise eine Karosserieaußenhaut (10) eines Kraftfahrzeugs (1), mit den Schritten
a) Bereitstellen der Dekorfolie (2);
b) Aufbringen einer Adhäsivschicht (26) auf die Dekorfolie (2);
c') Einschneiden eines vorgegebenen Musters von sternförmig auseinanderlaufenden oder rautenförmig gestalteten Kompressionsschlitzen (42, 43, 44, 45, 46, 47; 42', 43', 44', 45', 46', 47') und linearen Expansionsschlitzen (52, 54) in die Dekorfolie (2), derart, dass die Kompressionsschlitze (42, 43, 44, 45, 46, 47; 42', 43', 44', 45', 46', 47') und die Expansionsschlitze (52, 54) die Dekorfolie (2) in Dickenrichtung (D) durchdringen;
d') Aufbringen der mit der Adhäsivschicht (26) versehenen Dekorfolie (2) auf eine adhäsive Trägerfolie (27) zur Bildung einer Sandwich-Folie (19);
e) Aufbringen der Sandwich-Folie (19) auf die nicht-ebene Oberfläche (16), wobei die Sandwich-Folie (19) durch Dehnung der adhäsiven Trägerfolie (27) und der Dekorfolie (2) an konvexe Bereiche (17) der nicht-ebenen Oberfläche (16) angepasst wird und wobei die Sandwich-Folie (19) durch Stauchung der adhäsiven Trägerfolie (23) und der Dekorfolie (2) an konkave Bereiche (18) der nicht-ebenen Oberfläche (16) angepasst wird.

3. Verfahren nach Anspruch 1 oder 2,
**dadurch gekennzeichnet,**
**dass** das Einschneiden des vorgegebenen Musters aus den Kompressionsschlitzen (42, 43, 44, 45, 46, 47; 42', 43', 44', 45', 46', 47') und den Expansionsschlitzen (52, 54) in die Dekorfolie (2) mittels eines Laserstrahls erfolgt.

4. Verfahren nach Anspruch 1, 2 oder 3,
**dadurch gekennzeichnet,**
**dass** nach dem Aufbringen der Sandwich-Folie (19) auf die nicht-ebene Oberfläche (16) in einem weiteren Schritt e) eine Schutzschicht aus einer transparenten Schutzfolie oder eine Klarlackschicht auf die Sandwich-Folie (19) aufgebracht wird.

5. Verfahren nach einem der vorhergehenden Ansprüche,
**dadurch gekennzeichnet,**
**dass** zur Bestimmung des vorgegebenen Musters zunächst konvexe Bereiche (17) und konkave Bereiche (18) der nicht-ebenen Oberfläche (16) mittels eines CAD-Programms identifiziert und mit einer Konvexmarkierung beziehungsweise einer Konkavmarkierung markiert werden,
**dass** die so markierte nicht-ebene Oberfläche (16) in eine Ebene abgewickelt wird,
**dass** die Koordinaten der Konvexmarkierungen und der Konkavmarkierungen auf die ebene Dekorschicht (2) übertragen werden und
**dass** die Konvexmarkierungen Expansionsbereiche (5, 5') bestimmen, in die die Expansionsschlitze (52, 54) eingeschnitten werden und dass die Konkavmarkierungen Kompressionsbereiche (4, 4', 4"; 104, 104', 104", 104"', 104"") bestimmen, in die die sternförmig auseinanderlaufenden oder rautenförmig gestalteten Kompressionsschlitze (42, 43, 44, 45, 46, 47; 42', 43', 44', 45', 46', 47') eingeschnitten werden.

6. Verfahren nach einem der vorhergehenden Ansprüche,
**dadurch gekennzeichnet,**
**dass** erste Kompressionsbereiche (4, 4', 4") vorgesehen werden, bei denen die sternförmig auseinanderlaufenden Kompressionsschlitze (42, 43, 44, 45, 46, 47; 42', 43', 44', 45', 46', 47') ein gemeinsames Zentrum (41) aufweisen, das die Dekorfolie (2) in Dickenrichtung (D) durchdringt.

7. Verfahren nach einem der vorhergehenden Ansprüche,
**dadurch gekennzeichnet,**
**dass** zweite Kompressionsbereiche (104, 104', 104", 104‴, 104ʺʺ) vorgesehen werden, bei denen die inneren Enden der sternförmig auseinanderlaufenden Kompressionsschlitze im Zentrum (141, 141', 141", 141‴, 141ʺʺ) des Kompressionselements (140, 140', 140", 140"', 140ʺʺ) voneinander beabstandet sind, so dass im Zentrum (141, 141', 141", 141‴, 141ʺʺ) ein intakter Bereich der Dekorfolie (2) gebildet ist, in dem die Dekorfolie (2) in Dickenrichtung (D) nicht durchschnitten ist.

8. Verfahren nach einem der vorhergehenden Ansprüche,
**dadurch gekennzeichnet,**
**dass** die im Schritt a) bereitgestellte Dekorfolie (2) im oder vor dem Schritt a) auf eine vorgegebene Außenkontur beschnitten wird und dass die im Schritt c) beziehungsweise d') gebildete Sandwich-Folie (19) anschließend auf die gleiche Außenkontur beschnitten wird, wobei die dabei ausgeführte und die Trägerfolie (27) durchtrennende Schnittlinie von der Außenkonturlinie der Dekorfolie (2) beabstandet ist.

9. Verfahren nach einem der vorhergehenden Ansprüche,
**dadurch gekennzeichnet,**
**dass** die Dekorfolie (2) eine erste Elektrodenschicht (20) und eine zweite Elektrodenschicht (22) sowie eine zwischen den beiden Elektrodenschichten (20, 22) angeordnete Dekorschicht (24) aufweist, deren Lichtreflexionseigenschaften oder Lichttransmissionseigenschaften durch das Anlegen einer elektrischen Spannung veränderbar sind, und
**dass** die erste Elektrodenschicht (20) und die zweite Elektrodenschicht (22) der im Schritt a) bereitgestellten Dekorfolie (2) im oder vor dem Schritt a) mit elektrisch leitenden Kontaktfahnen (29, 29') versehen werden, die vorzugsweise jeweils um eine in der Ebene der jeweiligen Elektrodenschicht (20, 22) liegende Achse schwenkbar sind.

10. Sandwich-Folie (19) mit einer Dekorfolie (2), die mittels einer Adhäsivschicht (26) mit einer Trägerfolie (25) verbunden ist, hergestellt nach einem Verfahren gemäß einem der vorhergehenden Ansprüche.

11. Fahrzeug (1), insbesondere Kraftfahrzeug, mit zumindest einer nicht-ebene Oberflächenbereiche aufweisenden Oberfläche, die zumindest bereichsweise mittels eines Verfahrens nach einem der Ansprüche 1-9 mit einer eine Dekorfolie (2) aufweisenden Sandwich-Folie (19) nach Anspruch 10 versehen worden ist.

## Claims

1. Method for applying an inherently rigid decorative film (2) with a decorative layer (24) onto a non-planar surface (16), preferably a body shell (10) of a motor vehicle (1), comprising the steps of:
(a) supplying the decorative film (2);
(b) applying an adhesive layer (26) onto the decorative film (2);
(c) applying the decorative film (2) provided with the adhesive layer (26) onto an adhesive carrier film (27) in order to form a sandwich film (19);
(d) cutting a predefined pattern of compression slits (42, 43, 44, 45, 46, 47; 42', 43', 44', 45', 46', 47') that fan out in a star shape or are diamond-shaped as well as linear expansion slits (52, 54) into the decorative film (2), such that the compression slits (42, 43, 44, 45, 46, 47; 42', 43', 44', 45', 46', 47') and the expansion slits (52, 54) penetrate the decorative film (2) in the thickness direction (D);
(e) applying the sandwich film (19) onto the non-planar surface (16), wherein the sandwich film (19) is adapted to convex regions (17) of the non-planar surface (16) by stretching the adhesive carrier film (27) and decorative film (2) and wherein the sandwich film (19) is adapted to concave regions (18) of the non-planar surface (16) by compressing the adhesive carrier film (27) and decorative film (2).

2. Method for applying an inherently rigid decorative film (2) with a decorative layer (24) onto a non-planar surface (16), preferably a body shell (10) of a motor vehicle (1), comprising the steps of:
(a) supplying the decorative film (2);
(b) applying an adhesive layer (26) onto the decorative film (2);
(c') cutting a predefined pattern of compression slits (42, 43, 44, 45, 46, 47; 42', 43', 44', 45', 46', 47') that fan out in a star shape or are diamond-shaped as well as linear expansion slits (52, 54) into the decorative film (2), such that the compression slits (42, 43, 44, 45, 46, 47; 42', 43', 44', 45', 46', 47') and the expansion slits (52, 54) penetrate the decorative film (2) in the thickness direction (D);
(d') applying the decorative film (2) provided with the adhesive layer (26) onto an adhesive carrier film (27) in order to form a sandwich film (19);
(e) applying the sandwich film (19) onto the non-planar surface (16), wherein the sandwich film (19) is adapted to convex regions (17) of the non-planar surface (16) by stretching the adhesive carrier film (27) and decorative film (2) and wherein the sandwich film (19) is adapted to concave regions (18) of the non-planar surface (16) by compressing the adhesive carrier film (23) and decorative film (2).

3. Method according to claim 1 or 2,
**characterised in that**
the predefined pattern of the compression slits (42, 43, 44, 45, 46, 47; 42', 43', 44', 45', 46', 47') and expansion slits (52, 54) is cut into the decorative film (2) by means of a laser beam.

4. Method according to claim 1, 2 or 3,
**characterised in that**,
in a further step e), a protective layer consisting of a transparent protective film or a clear coat layer is applied onto the sandwich film (19) after the sandwich film (19) has been applied onto the non-planar surface (16).

5. Method according to any of the preceding claims,
**characterised in that**,
in order to determine the predefined pattern, firstly convex regions (17) and concave regions (18) of the non-planar surface (16) are identified by means of a CAD programme and are marked with a convex marking or a concave marking, respectively,
the non-planar surface (16) marked in this manner is developed into a plane,
the coordinates of the convex markings and concave markings are transferred to the planar decorative layer (2), and
the convex markings designate expansion regions (5, 5') into which the expansion slits (52, 54) are cut and the concave markings designate compression regions (4, 4', 4"; 104, 104', 104", 104"', 104"") into which the compression slits (42, 43, 44, 45, 46, 47; 42', 43', 44', 45', 46', 47') that fan out in a star shape or are diamond-shaped are cut.

6. Method according to any of the preceding claims,
**characterised in that**
first compression regions (4, 4', 4") are provided, in which the compression slits (42, 43, 44, 45, 46, 47; 42', 43', 44', 45', 46', 47') that fan out in a star shape have a common centre (41) that penetrates the decorative film (2) in the thickness direction (D).

7. Method according to any of the preceding claims,
**characterised in that**
second compression regions (104, 104', 104", 104"', 104"") are provided, in which the inner ends of the compression slits that fan out in a star shape are spaced apart from one another in the centre (141, 141', 141", 141"', 141"") of the compression element (140, 140', 140", 140"', 140""), such that an intact region of the decorative film (2) in which the decorative film (2) has not been cut through in the thickness direction (D) is formed in the centre (141, 141', 141", 141"', 141"").

8. Method according to any of the preceding claims,
**characterised in that**
the decorative film (2) supplied in step a) is trimmed to a predefined outer contour in or before step a) and the sandwich film (19) formed in step c) or d') is subsequently trimmed to the same outer contour, wherein the cutting line that is made in the process and that cuts through the carrier film (27) is spaced apart from the outer contour line of the decorative film (2).

9. Method according to any of the preceding claims,
**characterised in that**
the decorative film (2) has a first electrode layer (20) and a second electrode layer (22) as well as a decorative layer (24) arranged between the two electrode layers (20, 22), the light reflection properties or light transmission properties of which decorative layer can be changed by applying an electrical voltage, and the first electrode layer (20) and the second electrode layer (22) of the decorative film (2) supplied in step a) is provided with electrically conductive contact tabs (29, 29') in or before step a), which contact tabs are preferably pivotable in each case about an axis lying in the plane of the relevant electrode layer (20, 22).

10. Sandwich film (19) with a decorative film (2) that is connected to a carrier film (25) by means of an adhesive layer (26), said sandwich film being produced according to a method according to any of the preceding claims.

11. Vehicle (1), in particular motor vehicle, with at least one surface which comprises non-planar surface regions and which has been provided at least in regions with a sandwich film (19) according to claim 10 comprising a decorative layer (2) by means of a method according to any of claims 1-9.

## Revendications

1. Procédé pour appliquer un film décoratif (2) rigide en soi avec une couche décorative (24) sur une surface non plane (16), de préférence une enveloppe extérieure de carrosserie (10) d'un véhicule à moteur (1), avec les étapes
a) de fourniture du film décoratif (2) ;
b) d'application d'une couche adhésive (26) sur le film décoratif (2) ;
c) d'application du film décoratif (2) muni de la couche adhésive (26) sur un film support (27) adhésif pour former un film sandwich (19) ;
d) d'entaillage d'un motif prédéfini de fentes de compression (42, 43, 44, 45, 46, 47 ; 42', 43', 44', 45', 46', 47') s'écartant les unes des autres en étoile ou conçues en losange et de fentes d'expansion (52, 54) linéaires dans le film décoratif (2), de sorte que les fentes de compression (42, 43, 44, 45, 46, 47 ; 42', 43', 44', 45', 46', 47') et les fentes d'expansion (52, 54) traversent le film décoratif (2) dans le sens de l'épaisseur (D) ;
e) d'application du film sandwich (19) sur la surface non plane (16), dans lequel le film sandwich (19) est adapté par extension du film support (27) adhésif et du film décoratif (2) à des zones convexes (17) de la surface non plane (16) et dans lequel le film sandwich (19) est adapté par compression du film support (27) adhésif et du film décoratif (2) à des zones concaves (18) de la surface non plane (16).

2. Procédé pour appliquer un film décoratif (2) rigide en soi avec une couche décorative (24) sur une surface non plane (16), de préférence une enveloppe extérieure de carrosserie (10) d'un véhicule à moteur (1), avec les étapes
a) de fourniture du film décoratif (2) ;
b) d'application d'une couche adhésive (26) sur le film décoratif (2) ;
c') d'entaillage d'un motif prédéfini de fentes de compression (42, 43, 44, 45, 46, 47 ; 42', 43', 44', 45', 46', 47') s'écartant les unes des autres en étoile ou conçues en losange et de fentes d'expansion (52, 54) linéaires dans le film décoratif (2), de telle sorte que les fentes de compression (42, 43, 44, 45, 46, 47 ; 42', 43', 44', 45', 46', 47') et les fentes d'expansion (52, 54) traversent le film décoratif (2) dans le sens de l'épaisseur (D) ;
d') d'application du film décoratif (2) muni de la couche adhésive (26) sur un film support (27) adhésif pour former un film sandwich (19) ;
e) d'application du film sandwich (19) sur la surface non plane (16), dans lequel le film sandwich (19) est adapté par étirement du film support (27) adhésif et du film décoratif (2) à des zones convexes (17) de la surface non plane (16) et dans lequel le film sandwich (19) est adapté par compression du film support adhésif (23) et du film décoratif (2) à des zones concaves (18) de la surface non plane (16).

3. Procédé selon la revendication 1 ou la revendication 2,
**caractérisé en ce**
**que** l'entaillage du motif prédéfini à partir des fentes de compression (42, 43, 44, 45, 46, 47 ; 42', 43', 44', 45', 46', 47') et des fentes d'expansion (52, 54) dans le film décoratif (2) s'effectue au moyen d'un faisceau laser.

4. Procédé selon la revendication 1, la revendication 2 ou la revendication 3,
**caractérisé en ce**
**qu'**après l'application du film sandwich (19) sur la surface non plane (16), une couche de protection composée d'un film de protection transparent ou d'une couche de vernis incolore est appliquée sur le film sandwich (19) à une autre étape e).

5. Procédé selon l'une quelconque des revendications précédentes,
**caractérisé en ce**
**que** pour déterminer le modèle prédéfini, des zones convexes (17) et des zones concaves (18) de la surface non plane (16) sont d'abord identifiées au moyen d'un programme CAO et marquées avec un marquage convexe ou un marquage concave, que la surface non plane (16) ainsi marquée est déroulée dans un plan,
**que** les coordonnées des marquages convexes et des marquages concaves sont transférées sur la couche décorative (2) plane et
**que** les marquages convexes déterminent des zones d'expansion (5, 5') dans lesquelles les fentes d'expansion (52, 54) sont entaillées et
**que** les marquages concaves déterminent des zones de compression (4, 4', 4'' ; 104, 104', 104'', 104‴, 104ʺʺ), dans lesquelles les fentes de compression (42, 43, 44, 45, 46, 47 ; 42', 43', 44', 45', 46', 47') s'écartant les unes des autres en étoile ou conçues en losange sont entaillées.

6. Procédé selon l'une quelconque des revendications précédentes,
**caractérisé en ce**
**que** des premières zones de compression (4, 4', 4ʺ) sont prévues, pour lesquelles les fentes de compression (42, 43, 44, 45, 46, 47 ; 42', 43', 44', 45', 46', 47') s'écartant les unes des autres en étoile présentent un centre (41) commun qui traverse le film décoratif (2) dans le sens de l'épaisseur (D).

7. Procédé selon l'une quelconque des revendications précédentes,
**caractérisé en ce**
**que** les deuxièmes zones de compression (104, 104', 104", 104‴, 104ʺʺ), pour lesquelles les extrémités internes des fentes de compression (141, 141', 141", 141‴, 141ʺʺ) s'écartant les unes des autres en étoile au centre de l'élément de compression (140, 140', 140", 140‴, 140ʺʺ) sont espacées les unes des autres, de sorte qu'une zone intacte du film décoratif (2), dans laquelle le film décoratif (2) n'est pas coupé dans le sens de l'épaisseur (D), est formée au centre (141, 141', 141", 141‴, 141ʺʺ).

8. Procédé selon l'une quelconque des revendications précédentes,
**caractérisé en ce**
**que** le film décoratif (2) fourni à l'étape a) est découpé à ou avant l'étape a) selon un contour extérieur prédéfini et
**que** le film sandwich (19) formé à l'étape c) ou d') est ensuite découpé selon le même contour extérieur, dans lequel la ligne de coupe ainsi réalisée et sectionnant le film support (27) est espacée de la ligne de contour extérieur du film décoratif (2).

9. Procédé selon l'une quelconque des revendications précédentes,
**caractérisé en ce**
**que** le film décoratif (2) présente une première couche d'électrodes (20) et une deuxième couche d'électrodes (22) ainsi qu'une couche décorative (24) disposée entre les deux couches d'électrodes (20, 22) dont les propriétés de réflexion de lumière ou les propriétés de transmission de lumière sont modifiables par l'application d'une tension électrique, et
**que** la première couche d'électrodes (20) et la deuxième couche d'électrodes (22) du film décoratif (2) fourni à l'étape a) sont munies à ou avant l'étape a) de languettes de contact (29, 29') électriquement conductrices, qui sont de préférence pivotantes chacune autour d'un axe situé dans le plan de la couche d'électrodes (20, 22) respective.

10. Film sandwich (19) avec un film décoratif (2) qui est relié au moyen d'une couche adhésive (26) à un film support (25), fabriqué selon un procédé selon l'une quelconque des revendications précédentes.

11. Véhicule (1), en particulier véhicule à moteur, avec au moins une surface présentant des zones de surface non planes, qui a été pourvue au moins par endroits au moyen d'un procédé selon l'une quelconque des revendications 1 à 9 d'un film sandwich (19) selon la revendication 10 présentant un film décoratif (2).
